# EUROPEAN PATENT SPECIFICATION

(11) **EP 3 258 181 B1**
(45) Date of publication and mention of the grant of the patent: **16.12.2020**
(21) Application number: 15894289.6
(22) Date of filing: 30.10.2015
(51) Int. Cl.: F24F 7/08, F24F 13/22, F24F 12/00

(54) **HEAT EXCHANGE-TYPE VENTILATION DEVICE**
WÄRMETAUSCHARTIGE BELÜFTUNGSVORRICHTUNG
DISPOSITIF DE VENTILATION DE TYPE À ÉCHANGE DE CHALEUR

(30) Priority: 29.05.2015 WO PCT/JP2015/065677; 29.05.2015 WO PCT/JP2015/065678; 29.05.2015 WO PCT/JP2015/065679
(43) Date of publication of application: 20.12.2017
(73) Proprietor: Mitsubishi Electric Corporation, Chiyoda-ku Tokyo 100-8310 (JP)
(72) Inventor: MIYAZAKI, Yuki, Tokyo 100-8310 (JP); AOKI, Hiroki, Tokyo 100-8310 (JP); IWATA, Koji, Tokyo 100-8310 (JP); FUJII, Yoshinori, Tokyo 102-0073 (JP); KATO, Shinya, Tokyo 102-0073 (JP)
(74) Representative: Pfenning, Meinig & Partner mbB
(86) International application number: PCT/JP2015/080853
(87) International publication number: WO 2016/194257

(56) References cited:
- EP-A1- 2 426 425
- WO-A1-2010/125632
- DE-A1-102009 032 047
- JP-A- H0 611 148
- JP-A- H07 293 960
- JP-A- H11 281 085
- JP-A- 2001 272 071
- JP-A- 2005 300 113
- JP-A- 2006 064 316
- JP-A- 2011 257 124
- JP-U- S63 132 228
- US-A- 5 461 879

## Description

### Field

The present invention relates to a heat-exchange type ventilation apparatus that provides ventilation while allowing heat exchange between a supply airflow and a discharge airflow.

### Background

In conventional heat-exchange type ventilation apparatuses that provide ventilation while allowing heat exchange between a supply airflow and a discharge airflow, the discharge airflow that is high in temperature and humidity and the supply airflow that is low in temperature cross each other in the heat exchanger and thus condensation may occur in a discharge air path in the heat exchanger. Further, rainwater in outside air may be taken into the heat exchanger together with the air when fog occurs outside or when rainstorm occurs. Consequently, the heat exchanger has a possibility that drain water is generated in both the discharge air path and the supply air path.

Patent Literature 1 discloses a technique for retaining drain water generated in a heat exchanger by providing a drain pan on each of the discharge air side and the supply air side. Patent Literatures 2 and 3 both concern a heat exchanging ventilator.

### Citation List

### Patent Literature

Patent Literature 1: Japanese Patent Application Laid-open No. 2003-74936
Patent Literature 2: Japanese Patent Application Laid-open No^{.} H07-293960 which discloses the features of the preamble of claim 1.
Patent Literature 3: European Patent Application 2 426 425 A1

### Summary

### Technical Problem

However, with the above conventional technique, because the drain pan on the discharge air side and the drain pan on the supply air side are separately provided, there is a problem in that air under the roof enters the heat-exchange type ventilation apparatus through the joint between the drain pan on the discharge air side and the drain pan on the supply air side and thus the supply airflow or the discharge airflow and the air under the roof are easily mixed with each other.

The present invention has been achieved in view of the above, and an object of the present invention is to provide a heat-exchange type ventilation apparatus in which a supply airflow or a discharge airflow and air under the roof are not mixed easily.

### Solution to Problem

To solve the above problems and achieve the object, a heat-exchange type ventilation apparatus according to claim 1 is proposed. An aspect includes: a main body in which a supply air path to supply outside air to an inside of a room and a discharge air path to discharge inside air to an outside of the room are formed; a heat exchanger placed in the main body to allow heat exchange between a supply airflow passing through the supply air path and a discharge airflow passing through the discharge air path; an air supplying fan to generate the supply airflow, the air supplying fan being fixed inside the main body; and an air discharging fan to generate the discharge airflow, the air discharging fan being fixed inside the main body. Moreover, an aspect of the present invention includes a drain pan including a supply-air-side drain pan portion and a discharge-air side drain pan portion that are integrally formed with each other and covering an entire bottom surface of the main body, the supply-air-side drain pan portion retaining drain water generated in the supply air path inside the heat exchanger, the discharge-air side drain pan portion retaining drain water generated in the discharge air path inside the heat exchanger. The drain pan has a groove that faces a rib that surrounds a motor accommodating portion of the air supplying fan.

### Advantageous Effects of Invention

A heat-exchange type ventilation apparatus according to the present invention produces an effect that a supply airflow or a discharge airflow and air under the roof are not mixed easily.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the heat-exchange type ventilation apparatus according to the first embodiment.
FIG. 17 is a partially enlarged perspective view of the supply air filter frame according to the first embodiment.
FIG. 18 is an exploded perspective view of the air supplying fan and an air discharging fan in the heat-exchange type ventilation apparatus according to the first embodiment.
FIG. 19 is a partially enlarged cross-sectional view of a portion D illustrated in FIG. 4.
FIG. 20 is a partially enlarged perspective view of the portion D illustrated in FIG. 4.

### Description of Embodiments

A heat-exchange type ventilation apparatus according to embodiments of the present invention will now be described in detail with reference to the drawings. The present invention is not limited to the embodiments.

### First embodiment.

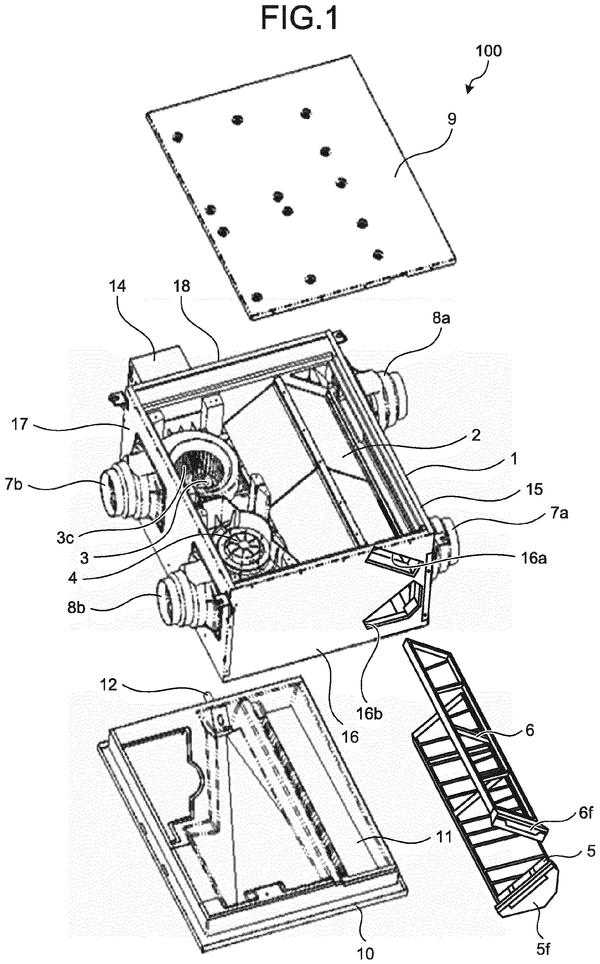

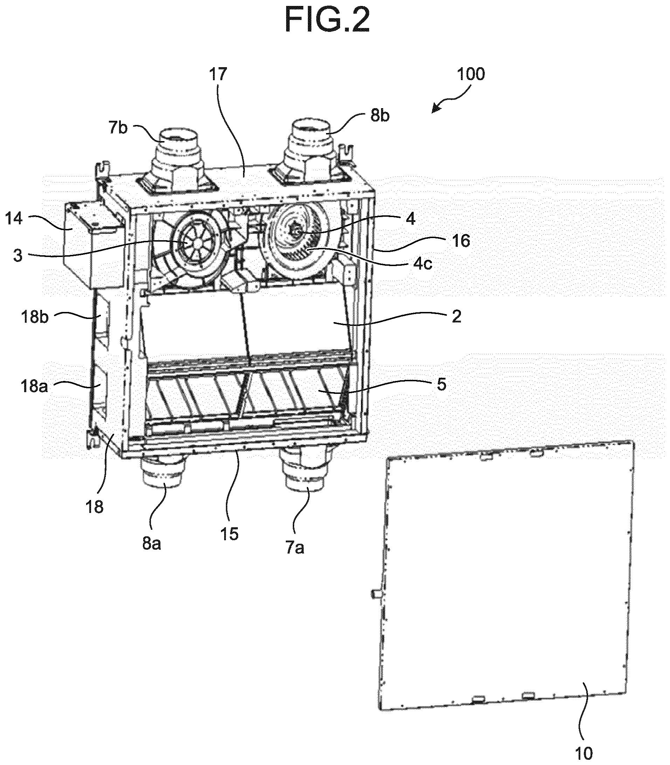

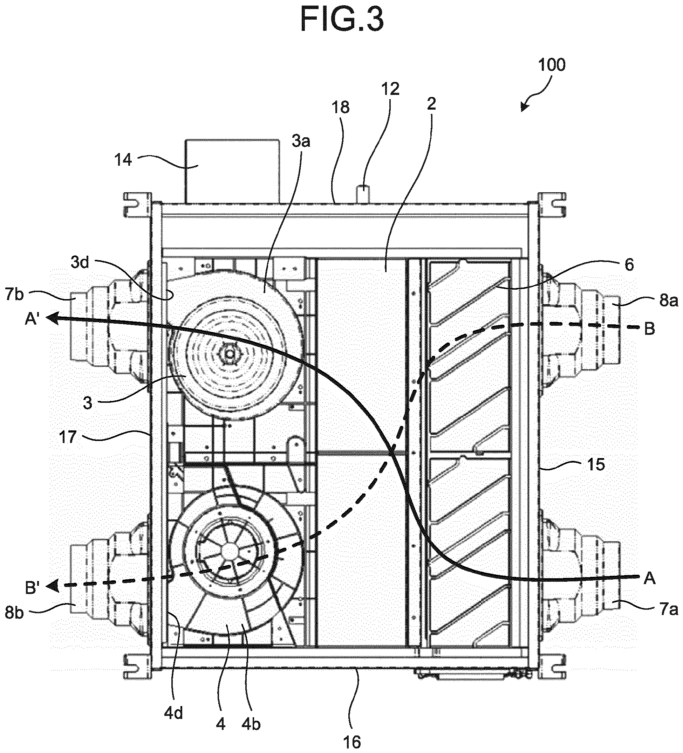

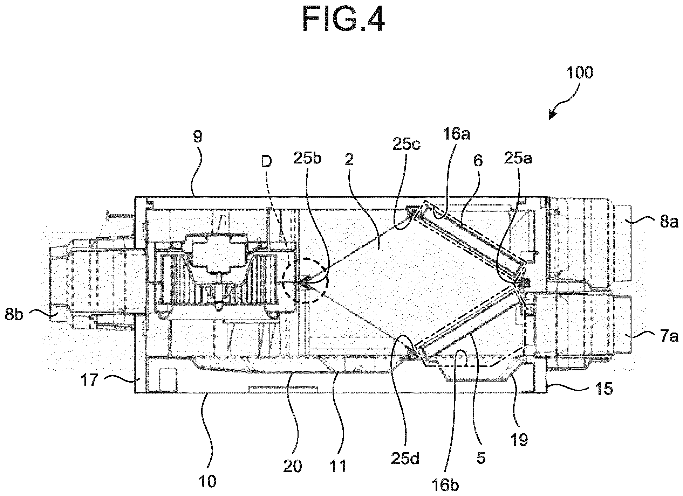

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a, which is an inlet port to admit outside air; an interior-side inlet portion 8a, which is an inlet port to admit inside air; an interior-side outlet portion 7b, which is an outlet port to discharge outside air; and an exterior-side outlet portion 8b, which is an outlet port to discharge inside air, formed therein. A supply air path that connects the exterior-side inlet portion 7a and the interior-side outlet portion 7b and supplies outside air into the room is formed in the housing 1. A discharge air path that connects the interior-side inlet portion 8a and the exterior-side outlet portion 8b and discharges inside air to the outside of the room is also formed in the housing 1.

The air supplying fan 3 is placed in the supply air path. The air supplying fan 3 generates a supply airflow that causes supply air that is outside air admitted through the exterior-side inlet portion 7a into the supply air path to flow out through the interior-side outlet portion 7b.

The air discharging fan 4 is placed in the discharge air path. The air discharging fan 4 generates a discharge airflow that causes discharge air that is inside air admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is an apparatus that provides ventilation while allowing heat exchange between the supply airflow and the discharge airflow.

The housing 1 includes six surfaces, i.e., a top plate 9, a bottom plate 10 opposite the top plate 9, and four side plates 15, 16, 17, and 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. As illustrated in FIG. 3, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'. The air supplying fan 3 is disposed downstream of the heat exchanger 2 in the supply air path. The air discharging fan 4 is disposed downstream of the heat exchanger 2 in the discharge air path.

A control circuit 14 is attached to the side plate 18. As illustrated in FIG. 2, the side plate 18 has an opening 18a and an opening 18b, which can be used as ports to admit air into the discharge air path B-B', in addition to the interior-side inlet portion 8a. The opening 18a is connected to the discharge air path upstream of the heat exchanger 2 and thus the air admitted from the opening 18a is discharged through the heat exchanger 2. The opening 18b is connected to the discharge air path downstream of the heat exchanger 2 and thus the air admitted from the opening 18b is discharged without going through the heat exchanger 2. Consequently, when a duct in communication with the room is connected to the opening 18b, inside air is discharged without going through the heat exchanger 2 and thus heat exchange is not performed. It is possible to reduce the pressure loss needed for the air to pass through the heat exchanger 2 although heat exchange is not performed between inside air and outside air. In this manner, the load on the air discharging fan 4 can be reduced and thereby the power consumption can be reduced. The side plate 16, which is opposite the side plate 18, has openings 16a and 16b, which are insertion apertures. The supply air filter 5 can be inserted into the housing 1 through the opening 16b. The discharge air filter 6 can be inserted into the housing 1 through the opening 16a. Because maintenance can be performed on both of the supply air filter 5 and the discharge air filter 6 from one direction of the side plate 16, ease of cleaning can be improved.

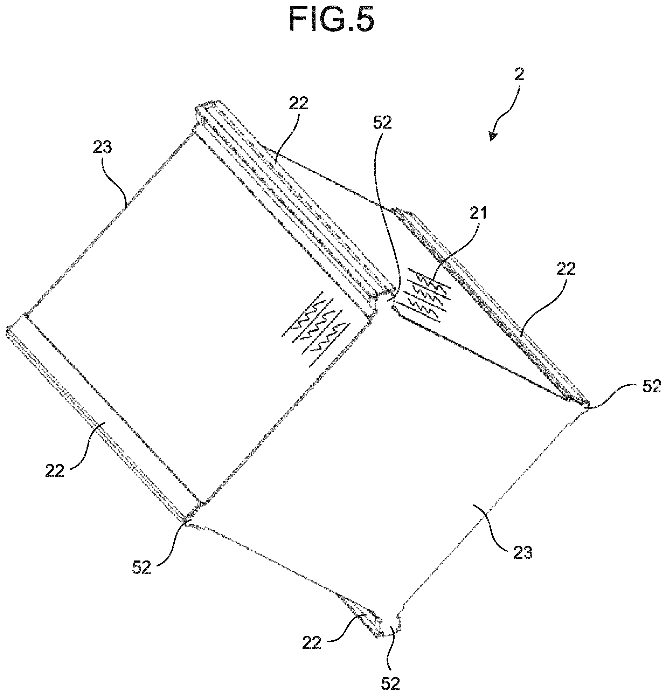

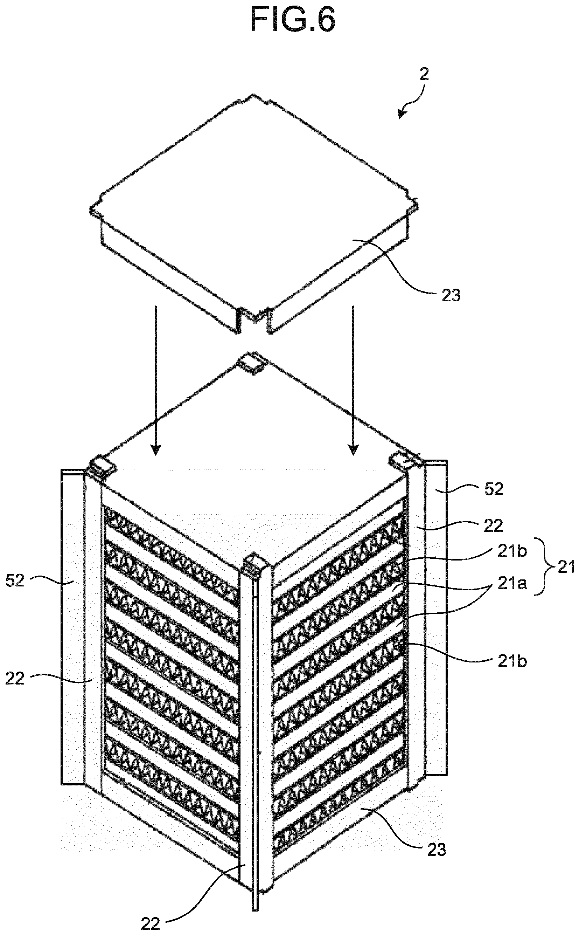

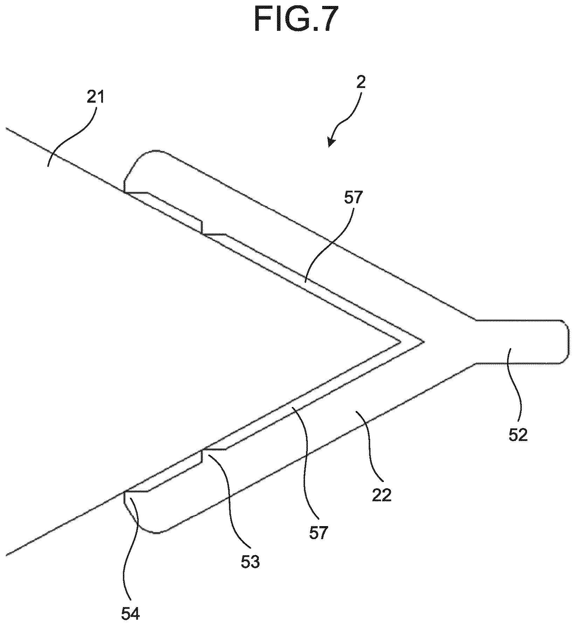

FIG. 5 is a perspective view of the heat exchanger according to the first embodiment. FIG. 6 is an exploded perspective view of the heat exchanger according to the first embodiment. FIG. 7 is a partially enlarged cross-sectional view of a corner portion of the heat exchanger according to the first embodiment.

The heat exchanger 2 includes a heat exchange element 21, frame members 22, and end face members 23. The heat exchange element 21 is formed by alternately stacking partition members 21a, each of which is made from paper and has a sheet-like and polygonal shape, and spacing members 21b, each of which is made from paper and has a wave-like shape. In the first embodiment, the partition members 21a and the spacing members 21b have a square shape as viewed from the stacking direction of the partition members 21a, and thus, the heat exchange element 21 formed by stacking the partition members 21a and the spacing members 21b has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The ridge portions of the heat exchange element 21 that extend in the stacking direction are covered by the frame members 22.

The frame members 22 cover the ridge portions of the heat exchange element 21 that extend in the stacking direction. As illustrated in FIGS. 5 and 7, each of the frame members 22 has an L-like shape in a section and faces two of the side surfaces of the heat exchange element 21 that extend from the ridge portions of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, a drain pan 11, which includes a drain port 12, is placed on the inner surface side of the bottom plate 10. The drain pan 11 includes a supply-air-side drain pan portion 19 to retain water resulting from condensation, due to the heat exchanger 2, of moisture contained in the air admitted through the exterior-side inlet portion 7a. The drain pan 11 also includes a discharge-air-side drain pan portion 20 to retain condensate generated when the heat exchanger 2 performs heat exchange between air admitted through the interior-side inlet portion 8a and air admitted through the exterior-side inlet portion 7a. The discharge-air-side drain pan portion 20 is in communication with the drain port 12; therefore, drain water can be discharged. If the amount of water retained in the supply-air-side drain pan portion 19 is large, the supply-air-side drain pan portion 19 may also be provided with a drain port.

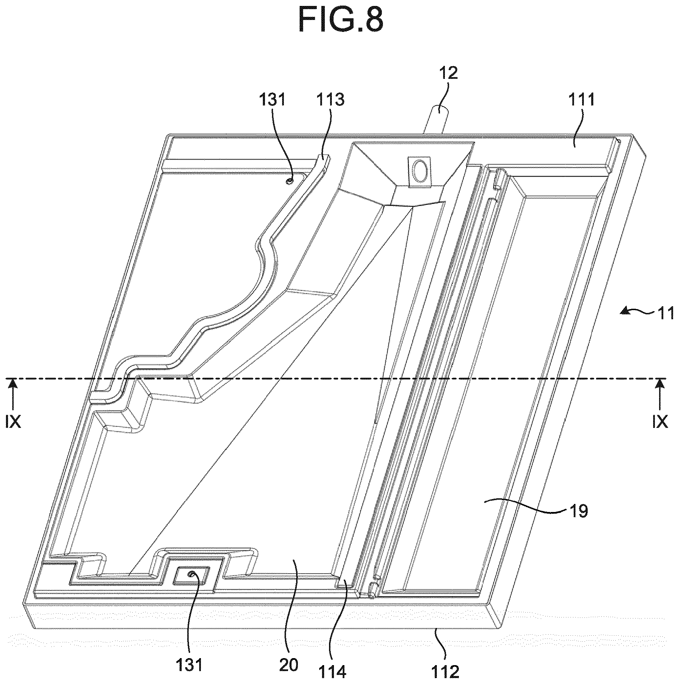

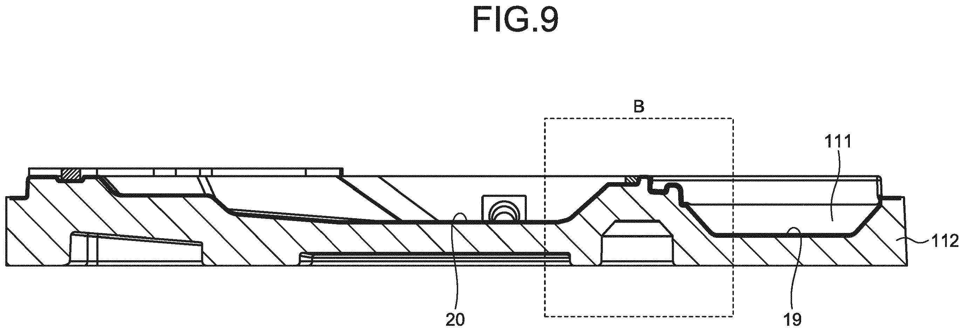

FIG. 8 is a perspective view of the drain pan of the heat-exchange type ventilation apparatus according to the first embodiment. FIG. 9 is a cross-sectional view of the drain pan of the heat-exchange type ventilation apparatus according to the first embodiment, and illustrates a cross-section taken along line IX-IX in FIG. 8. The drain pan 11 is formed by integrally molding an inner drain pan 111 and an outer drain pan 112 with each other. The inner drain pan 111 is formed of a resin sheet material. The outer drain pan 112 is formed of a foamed resin material. Examples of resin that can be used as the material of the inner drain pan 111 include acrylonitrile-butadiene-styrene copolymer synthetic resin, also referred to as ABS resin (acrylonitrile butadiene styrene copolymer). Examples of resin that can be used as the material of the outer drain pan 112 include foamed styrol. On the inner drain pan 111, a first gasket 113 and a second gasket 114 are placed. The first gasket 113 achieves airtightness between the discharge air path on the downstream side of the heat exchanger 2 and the air supplying fan 3, and the second gasket 114 achieves airtightness between the supply air path on the upstream side of the heat exchanger 2 and the discharge air path on the downstream side of the heat exchanger 2. An interconnected-cell foamed resin material can be used for the first gasket 113 and the second gasket 114. A sheet material made of polyvinyl chloride may be disposed on the second gasket 114 in order to maintain airtightness between the drain pan 11 and the supply air filter 5 and to improve ease of sliding of the supply air filer 5.

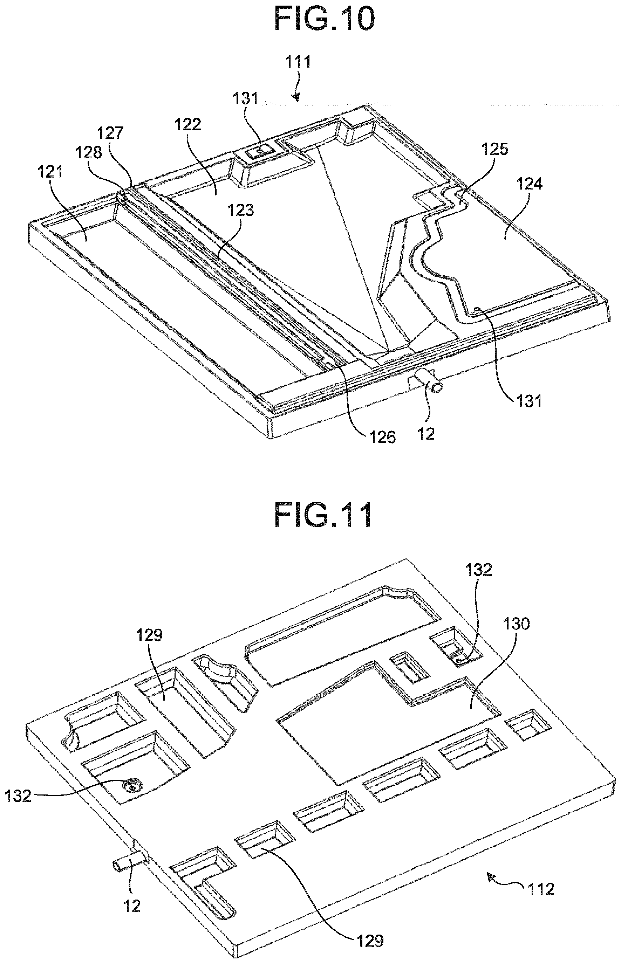

FIG. 10 is a perspective view of the drain pan of the heat-exchange type ventilation apparatus according to the first embodiment as viewed from the inner drain pan side. FIG. 10 illustrates the inner drain pan 111 side of the drain pan 11 before the first gasket 113 and the second gasket 114 are placed, as viewed from a different direction from that of FIG. 8. As illustrated in FIGS. 8 and 10, the inner drain pan 111 includes a first recess portion 121, which forms the supply-air-side drain pan portion 19, a second recess portion 122, which forms the discharge-air-side drain pan portion 20, a rib-like portion 123, which separates the first recess portion 121 and the second recess portion 122 from each other, and a pedestal portion 124, on which the air supplying fan 3 is mounted. A groove 125 is provided in the pedestal portion 124. Because the first gasket 113 is placed in the groove 125, it is possible to easily position the first gasket 113. The rib-like portion 123 is provided with a filter-rail groove 126 for disposing the supply air filter 5. The filter-rail groove 126 is formed between a first projecting portion 127 and a second projecting portion 128. The inner drain pan 111 has a screwing hole 131 used for screwing a screw into the bottom plate 10.

The first recess portion 121 is formed to be flat in such a manner that the first recess portion 121 is parallel to the bottom plate 10 of the housing 1 when the inner drain pan 111 is incorporated into the heat-exchange type ventilation apparatus 100. Consequently, drain water accumulated in the supply-air-side drain pan portion 19 spreads over the supply-air-side drain pan portion 19 uniformly, and therefore the surface area of the drain water increases. Accordingly, it is possible to dry the drain water by the supply airflow more easily. Meanwhile, the second recess portion 122 is inclined downward toward the drain port 12. That is, the second recess portion 122 is formed such that it is deepest at the drain port 12 and become shallower as the distance from the drain port 12 increases. Consequently, the drain water accumulated in the discharge-air-side drain pan portion 20 is collected to the drain port 12, and is discharged to the outside of the heat-exchange type ventilation apparatus 100 through the drain port 12 without staying in the discharge-air-side drain pan portion 20.

FIG. 11 is a perspective view of the drain pan of the heat-exchange type ventilation apparatus according to the first embodiment as viewed from the outer drain pan side. The outer drain pan 112 is provided with lightening holes 129 in the surface thereof that does not face the inner drain pan 111, i.e., the surface on the side that faces the bottom surface of the housing 1. The lightening holes 129 are provided in portions other than the portions facing the supply air path and the discharge air path with the inner drain pan 111 therebetween. Specifically, the lightening holes 129 are provided in a portion corresponding to the pedestal portion 124 and a portion corresponding to the rib-like portion 123. Further, the outer drain pan 112 is provided with a lightening hole 130 in a portion corresponding to the second recess portion 122. In the first embodiment, the lightening hole 130 in the portion corresponding to the second recess portion 122 is provided only in a portion where the depth of the second recess portion 122 is equal to or less than a reference value. The lightening holes 129 can be used as grips when the drain pan 11 is attached to the housing 1. Because the lightening holes 129 are provided in the portions other than the portions facing the supply air path and the discharge air path with the inner drain pan 111 therebetween, the heat insulating performance is not impaired even when the lightening holes 129 are provided. The outer drain pan 112 is provided with a screwing hole 132 used for screwing a screw into the bottom plate 10. The screwing hole 132 is connected to the screwing hole 131 of the inner drain pan 111.

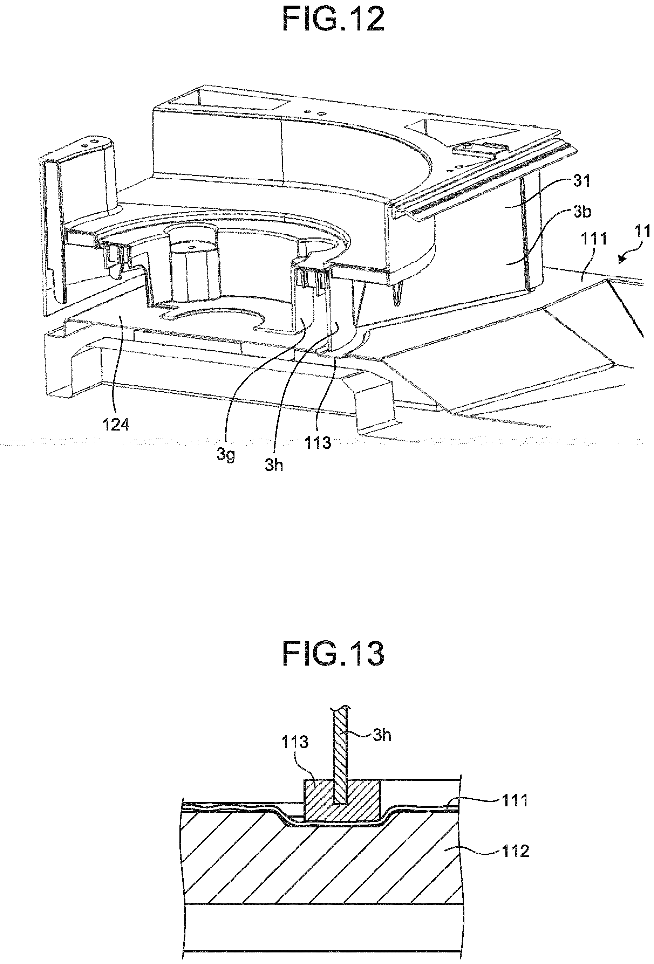

FIG. 12 is a cross-sectional perspective view illustrating a structure of a portion where the drain pan of the heat-exchange type ventilation apparatus according to the first embodiment and a casing of the air supplying fan are in contact with each other. FIG. 13 is a cross-sectional view schematically illustrating the structure of the portion where the drain pan of the heat-exchange type ventilation apparatus according to the first embodiment and the casing of the air supplying fan are in contact with each other. A motor casing 3b configuring a casing 31 of the air supplying fan 3 includes a motor accommodating portion 3g that accommodates a motor, and a rib 3h is provided to surround the motor accommodating portion 3g. The groove 125 is provided to correspond to the shape of the rib 3h, and therefore the air supplying fan 3 is separated from the discharge-air side drain pan portion 20 when the rib 3h abuts on the first gasket 113. Accordingly, discharge air can be prevented from entering the air supplying fan 3.

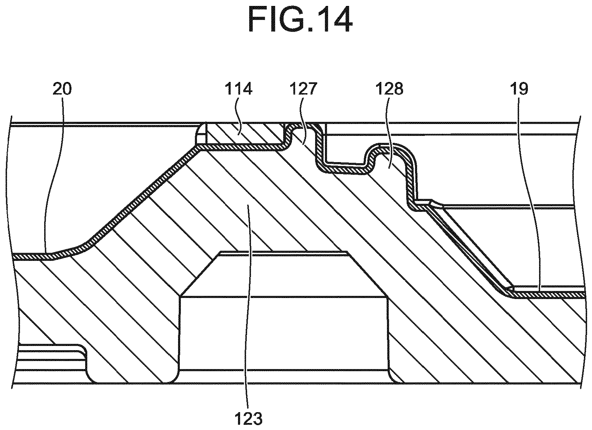

FIG. 14 is a cross-sectional view of the drain pan of the heat-exchange type ventilation apparatus according to the first embodiment. In FIG. 14, a portion B in FIG. 9 is enlarged. The second gasket 114, which abuts on the heat exchanger 2 to provide airtightness between the supply air path on the upstream side of the heat exchanger 2 and the discharge air path on the downstream side of the heat exchanger 2, is disposed along the first projecting portion 127. Consequently, it is possible to position the second gasket 114 easily. Accordingly, mixing of the supply airflow and the discharge airflow due to poor airtightness between the heat exchanger 2 and the drain pan 11 can be prevented.

The drain pan 11 includes both the supply-air-side drain pan portion 19 and the discharge-air-side drain pan portion 20, and there is no gap for air to leak between the supply-air-side drain pan portion 19 and the discharge-air-side drain pan portion 20. Consequently, it is possible to prevent mixing of the supply airflow or the discharge airflow and air in the housing 1 and under the roof.

In the heat-exchange type ventilation apparatus 100 according to the first embodiment, the exterior-side inlet portion 7a and the interior-side inlet portion 8a are provided on the same side of the housing 1, i.e., on the surface 15 side. Consequently, the discharge airflow provided by the inside air that is high in temperature and humidity and the supply airflow provided by the outside air that is low in temperature flow adjacent to each other and therefore condensation can easily occur in the housing 1. However, because the drain pan 11 includes the supply-air-side drain pan portion 19 and the discharge-air-side drain pan portion 20, it is possible to reliably retain drain water generated in the supply air path and the discharge air path. Further, even if airtightness between the discharge air path and the supply air path decreases due to the deterioration of the heat exchange element 21 and the drain water generated in the discharge air path enters the supply air path, the drain pan 11 can still retain water in the supply-air-side drain pan portion 19.

The heat exchanger 2 is inserted into the housing 1 through an opening generated by removing the drain pan 11. The heat exchanger 2 is placed in the housing 1 such that one ridge portion of the heat exchanger 2 that extends in the stacking direction and the diagonally opposite ridge portion of the heat exchanger 2 are lined up vertically. By placing the heat exchanger 2 in such a manner that the diagonally opposite ridge portions are lined up vertically, the area of heat exchange of the heat exchanger 2 can be used effectively and thereby an enhancement in thermal exchange efficiency can be achieved.

The housing 1 has support recess portions 25a, 25b, 25c, and 25d formed therein to support the heat exchanger 2. The support recess portions 25a, 25b, 25c, and 25d are grooves that extend in the stacking direction of the partition members 21a as placed in the housing 1.

The air supplying fan 3 and the air discharging fan 4 are placed closer to the side plate 17 than the heat exchanger 2. The position of the air supplying fan 3 is downstream of the heat exchanger 2 in the supply air path. The position of the air discharging fan 4 is downstream of the heat exchanger 2 in the discharge air path. The air supplying fan 3 and the air discharging fan 4 are placed in the housing 1 next to each other in the stacking direction of the partition members 21a such that their inlet ports 3c and 4c are oriented in opposite directions to each other and their outlet ports 3d and 4d are oriented in the same direction. By arranging the air supplying fan 3 and the air discharging fan 4 next to each other in the stacking direction of the partition members 21a, the housing 1 can be reduced in size in the height direction.

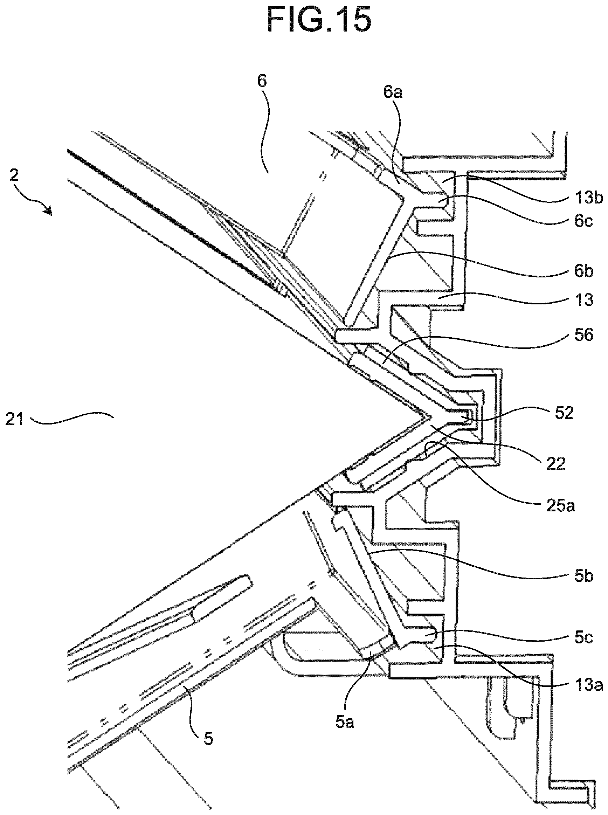

FIG. 15 is a partially enlarged cross-sectional view of a corner portion of the heat exchanger accommodated in the housing in the heat-exchange type ventilation apparatus according to the first embodiment. In FIG. 15, the corner portion of the heat exchanger 2 on the side of the supply air filter 5 and the discharge air filter 6 in the housing 1 is enlarged.

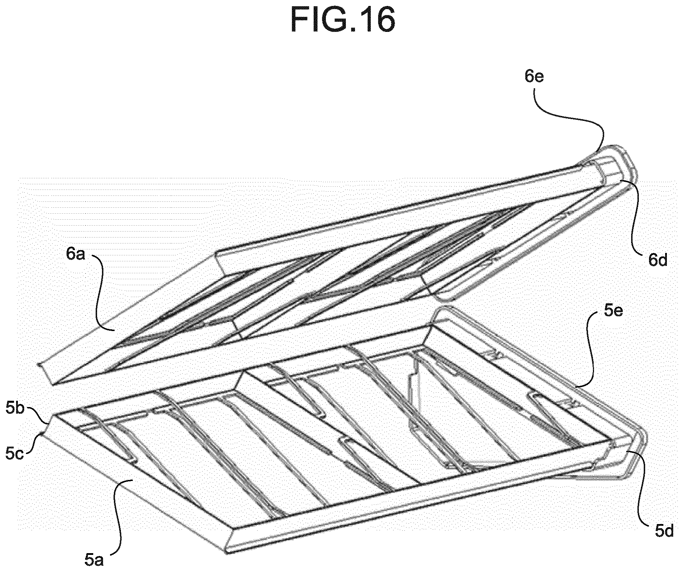

FIG. 16 is a perspective view of a supply air filter frame included in the supply air filter and a discharge air filter frame included in the discharge air filter of the heat-exchange type ventilation apparatus according to the first embodiment. The supply air filter 5 and the discharge air filter 6 include a supply air filter frame 5a and a discharge air filter frame 6a, which retain the filters formed from a nonwoven fabric or the like.

As illustrated in FIG. 1 and FIG. 4, the supply air filter 5 is inserted into the housing 1 through the opening 16b, which is formed in the housing 1, to abut on the surface of the heat exchanger 2 that is located on the upstream side in the supply air path. The discharge air filter 6 is inserted into the housing 1 through the opening 16a, which is formed in the housing 1, to abut on the surface of the heat exchanger 2 that is located on the upstream side in the discharge air path.

As illustrated in FIG. 15, a rib frame body 13 that supports the supply air filter 5 and the discharge air filter 6 is formed in the housing 1. A facing surface 5b of the supply air filter frame 5a that faces the rib frame body 13 has a frame protrusion 5c that extends in the stacking direction formed thereon. A facing surface 6b of the discharge air filter frame 6a that faces the rib frame body 13 has a frame protrusion 6c that extends in the stacking direction formed thereon.

Of the support recess portions 25a, 25b, 25c, and 25d that support the heat exchanger 2, the support recess portion 25a is formed in the rib frame body 13. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG 15, a seal material 56 may be interposed between the support recess portion 25a and the outer protrusion 52.

The rib frame body 13 has filter-frame guide recess portions 13a and 13b, which extend in the stacking direction formed therein such that the support recess portion 25a is located between the filter-frame guide recess portions 13a and 13b. As illustrated in FIG. 15, the frame protrusion 5c, which is formed on the supply air filter frame 5a, is fitted in the filter-frame guide recess portion 13a, and the frame protrusion 6c, which is formed on the discharge air filter frame 6a, is fitted in the filter-frame guide recess portion 13b. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction is guided. In this way, the supply air filter 5 and the discharge air filter 6 can be inserted and removed stably. Additionally, the supply air filter 5 is positioned in the housing 1 when the frame protrusion 5c is fitted in the filter-frame guide recess portion 13a, and the discharge air filter 6 is positioned in the housing 1 when the frame protrusion 6c is fitted in the filter-frame guide recess portion 13b.

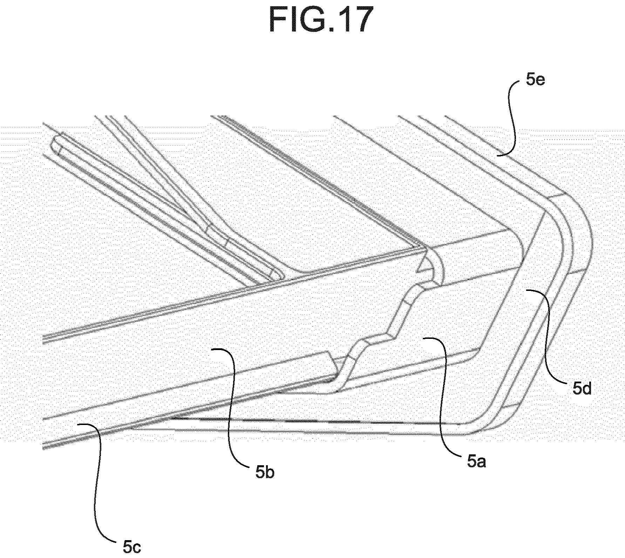

As illustrated in FIG. 16, the supply air filter frame 5a includes a supply-air-filter sealing surface portion 5d to provide sealing between the supply air filter frame 5a and the side plate 16 of the housing 1. The discharge air filter 6a includes a discharge-air-filter sealing surface portion 6d to provide sealing between the discharge air filter frame 6a and the side plate 16 of the housing 1. As illustrated in FIGS. 16 and 17, in order to further improve the airtightness, the supply-air-filter sealing surface portion 5d has a rib-like protrusion 5e and the discharge-air-filter sealing surface portion 6d has a protrusion 6e. As illustrated in FIG. 1, the supply air filter 5 is provided with a supply-air filter grip 5f that serves as a part to be held when the supply air filter 5 is inserted and removed and the discharge air filter 6 is provided with a discharge-air filter grip 6f that serves as a part to be held when the discharge air filter 6 is inserted and removed.

The opening 16b, which is formed in the side plate 16, has an enlarged opening portion so that insects and dust to be collected in the housing 1 can be cleaned from the housing 1. As illustrated in FIG. 1, the supply-air-filter sealing surface portion 5d has such a trapezoidal shape as to fit the shape of the opening 16b.

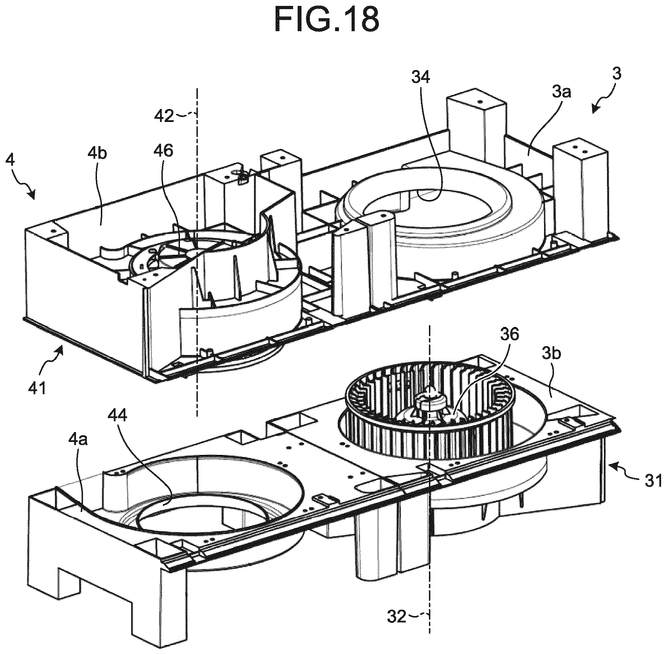

Of the support recess portions 25a, 25b, 25c, and 25d, the support recess portion 25b, which is placed on the side of the air supplying fan 3 and the air discharging fan 4, is formed at the air supplying fan 3 and the air discharging fan 4. FIG. 18 is an exploded perspective view of the air supplying fan and the air discharging fan in the heat-exchange type ventilation apparatus according to the first embodiment.

The casing 31 of the air supplying fan 3 includes an inlet-side casing 3a, which is a first casing, and the motor casing 3b, which is a second casing, and the inlet-side casing 3a and the motor casing 3b can be split from each other in a direction along a rotation axis 32 of a motor 36 at a splitting plane that is orthogonal to the rotation axis 32. The casing 31 is configured by combining the inlet-side casing 3a and the motor casing 3b. The inlet-side casing 3a includes an inlet portion 34 formed therein.

A casing 41 of the air discharging fan 4 includes an inlet-side casing 4a, which is a first casing, and a motor casing 4b, which is a second casing, and the inlet-side casing 4a and the motor casing 4b can be split from each other in a direction along a rotation axis 42 of a motor 46 at a splitting plane that is orthogonal to the rotation axis 42. The casing 41 is configured by combining the inlet-side casing 4a and the motor casing 4b. The inlet-side casing 4a includes an inlet portion 44 formed therein.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

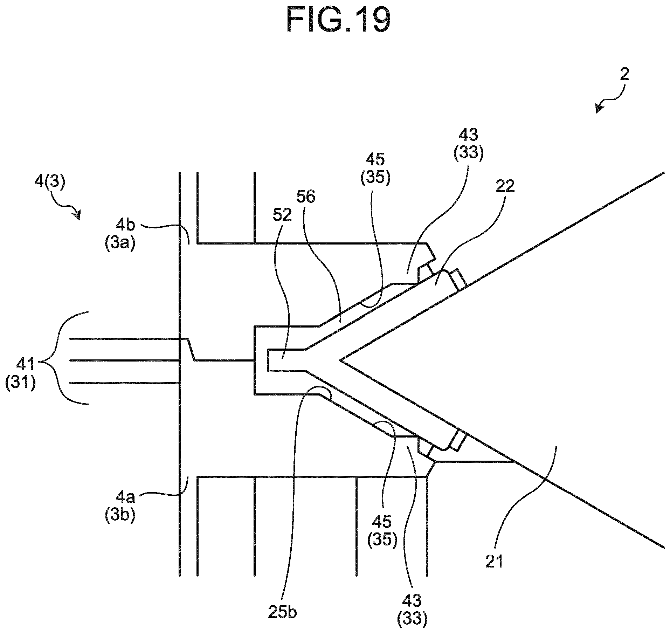

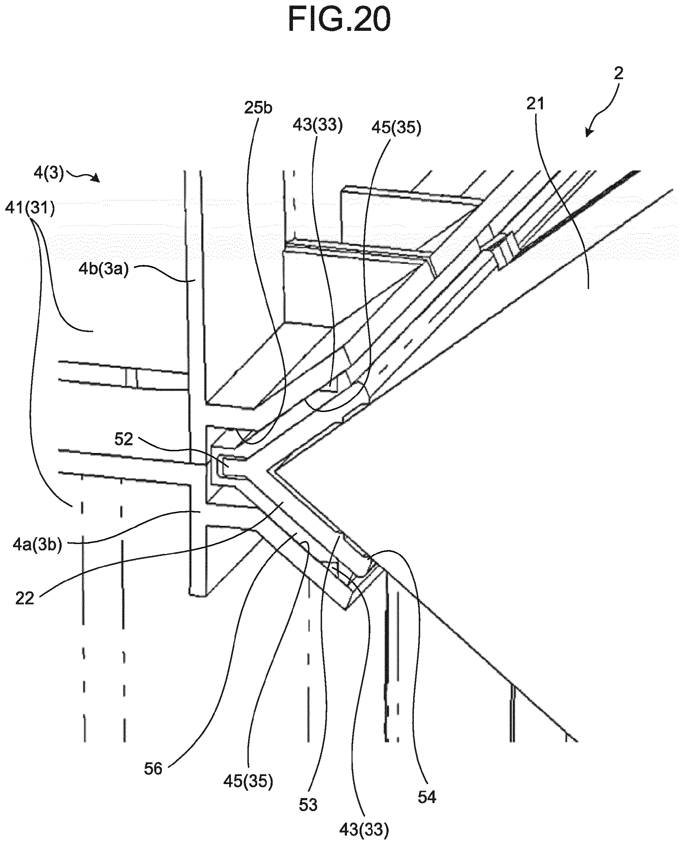

FIG. 19 is a partially enlarged cross-sectional view of a portion D illustrated in FIG. 4. FIG. 20 is a partially enlarged perspective view of the portion D illustrated in FIG. 4. The splitting plane between the inlet-side casing 4a and the motor casing 4b of the casing 41 of the air discharging fan 4 abuts on one of the ridge portions of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. The inlet-side casing 4a and the motor casing 4b have inclined surfaces 45 that face each other at the splitting plane. The support recess portion 25b is formed by the inclined surfaces 45, which face each other, by combining the inlet-side casing 4a and the motor casing 4b. The support recess portion 25b, which is formed by the inclined surfaces 45, is a V-shaped groove in cross-section. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the ridge portions of the heat exchanger 2 that extend in the stacking direction. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove in cross-section. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. The seal material 56 is interposed between the support recess portion 25b and the frame member 22. If a partition wall is placed between the air supplying fan 3 and the air discharging fan 4, and the heat exchanger 2, the support recess portion 25b may be formed in the partition wall.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52. The inner wall surfaces of the support recess portions 25c and 25d may have protrusions extending in the stacking direction.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, as illustrated in FIG. 7, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 on the end portions of each of the frame members 22 to function as end-portion-side protrusions, the inner protrusions 54 can function as walls to prevent the seal material 57 from leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a, 25b, 25c, and 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a, 25b, 25c, and 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a, 25b, 25c, and 25d. Moreover, by interposing the seal material 56 between the outer protrusions 52 and the support recess portions 25a, 25b, 25c, and 25d, the airtightness is maintained further reliably when the heat exchanger 2 has contracted. Furthermore, when the outer protrusions 52 are fitted in the support recess portions 25a, 25b, 25c, and 25d in greater depths, the airtightness can be maintained even when the heat exchanger 2 has a greater contraction.

Furthermore, as long as the outer protrusions 52 are fitted in the support recess portions 25a, 25b, 25c, and 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

### Reference Signs List

1 housing, 2 heat exchanger, 3 air supplying fan, 3a, 4a inlet-side casing, 3b, 4d motor casing, 3c, 4c inlet port, 3d, 4d outlet port, 3g motor accommodating portion, 3h rib, 4 air discharging fan, 5 supply air filter, 5a supply-air filter frame, 5b, 6b facing surface, 5c, 6c frame protrusion, 5d supply-air-filter sealing surface portion, 5e, 6e protrusion, 5f supply-air filter grip, 6 discharge air filter, 6a discharge-air filter frame, 6d discharge-air-filter sealing surface portion, 6f discharge-air filter grip, 7a exterior-side inlet portion, 7b interior-side outlet portion, 8a interior-side inlet portion, 8b exterior-side outlet portion, 9 top plate, 10 bottom plate, 11 drain pan, 12 drain port, 13 rib frame body, 13a, 13b filter-frame guide recess portion, 14 control circuit, 15, 16, 17, 18 side plate, 16a, 16b opening, 19 supply-air-side drain pan portion, 20 discharge-air-side drain pan portion, 21 heat exchange element, 21a partition member, 21b spacing member, 22 frame member, 23 end face member, 25a, 25b, 25c, 25d support recess portion, 31, 41 casing, 32, 42 rotation axis, 33, 43 protrusion, 33, 34 inlet portion, 35, 45 inclined surface, 36, 46 motor, 52 outer protrusion, 53, 54 inner protrusion, 56, 57 seal material, 100 heat-exchange type ventilation apparatus, 111 inner drain pan, 112 outer drain pan, 113 first gasket, 114 second gasket, 121 first recess portion, 122 second recess portion, 123 rib-like portion, 124 pedestal portion, 125 groove, 126 filter-rail groove, 127 first projecting portion, 128 second projecting portion, 129 lightening hole, 131, 132 screwing hole.

## Claims

1. A heat-exchange type ventilation apparatus (100), comprising:
a main body (1) in which a supply air path to supply outside air to an inside of a room and a discharge air path to discharge inside air to an outside of the room are formed;
a heat exchanger (2) placed in the main body (1) to allow heat exchange between a supply airflow passing through the supply air path and a discharge airflow passing through the discharge air path;
an air supplying fan (3) to generate the supply airflow, the air supplying fan (3) being fixed inside the main body (1);
an air discharging fan (4) to generate the discharge airflow, the air discharging fan (4) being fixed inside the main body (1); and
a drain pan (11) including a supply-air-side drain pan portion (19) and a discharge-air side drain pan portion (20) that are integrally formed with each other and covering an entire bottom surface of the main body (1), the supply-air-side drain pan portion (19) retaining drain water generated in the supply air path inside the heat exchanger (2), the discharge-air side drain pan portion (20) retaining drain water generated in the discharge air path inside the heat exchanger (2), wherein
the drain pan (11) includes a first recess portion (121) that forms the supply-air-side drain pan (19), a second recess portion (122) that forms the discharge-air side drain pan (20), and a rib-like portion (123) that separates the first recess portion (121) and the second recess portion (122) from each other, **characterized in that** the drain pan (11) has a groove (125) that faces a rib (3h) that surrounds a motor accommodating portion (3g) of the air supplying fan (3).

2. The heat-exchange type ventilation apparatus (100) according to claim 1, wherein
the drain pan (11) includes an outer drain pan (112) formed of a heat insulating material and an inner drain pan (111) that covers the outer drain pan (112) and separates the supply air path and the discharge air path from each other, and
the outer drain pan (112) has a plurality of lightening holes (129, 130) in a surface thereof opposite a surface that faces the inner drain pan (111).

3. The heat-exchange type ventilation apparatus (100) according to claim 2, wherein the outer drain pan (112) has the lightening holes (129) in a portion other than a portion that faces the supply air path and the discharge air path with the inner drain pan (111) therebetween.

4. The heat-exchange type ventilation apparatus (100) according to claim 1, wherein a bottom surface of the supply-air drain pan (11) is parallel to the bottom surface of the main body (1).

5. The heat-exchange type ventilation apparatus (100) according to any one of claims 1 to 4, further comprising a supply air filter (5) placed on the supply air path on an upstream side of the heat exchanger (2), wherein
the main body (1) has a port (7a) to admit the outside air and a port (8a) to admit the inside air in an identical side surface (15) and has a port (16a, 16b) to allow the supply air filter (5) to be detached in another side surface (16), and
the drain pan (11) includes a guide portion (126) to guide the supply air filter (5).

## Patentansprüche

1. Lüftungsvorrichtung (100) des Wärmeaustauschtyps, umfassend:
einen Hauptkörper (1), in dem ein Zuluftweg für die Zuführung von Außenluft ins Innere eines Raumes und ein Abluftweg zum Abführen von Innenluft aus dem Raum hinaus ausgebildet sind;
einen Wärmetauscher (2), der in dem Hauptkörper (1) angeordnet ist, um einen Wärmeaustausch zwischen einem Zuluftstrom, der durch den Zuluftweg strömt, und einem Abluftstrom, der durch den Abluftweg strömt, zu ermöglichen;
ein Zuluftgebläse (3), um den Zuluftstrom zu erzeugen, wobei das Zuluftgebläse (3) innerhalb des Hauptkörpers (1) befestigt ist;
ein Abluftgebläse (4), um den Abluftstrom zu erzeugen, wobei das Abluftgebläse (4) innerhalb des Hauptkörpers (1) befestigt ist; und
eine Ablaufwanne (11), die einen zuluftseitigen Ablaufwannenabschnitt (19) und einen ablaufseitigen Ablaufwannenabschnitt (20) aufweist, die einstückig miteinander ausgebildet sind und die eine gesamte Bodenfläche des Hauptkörpers (1) abdecken, wobei der zuluftseitige Ablaufwannenabschnitt (19) ablaufendes Wasser, das in dem Zuluftweg innerhalb des Wärmetauschers (2) erzeugt wird, zurückhält, der abluftseitige Ablaufwannenabschnitt (20) ablaufendes Wasser, das in dem Abluftweg innerhalb des Wärmetauschers (2) erzeugt wird, zurückhält, wobei
die Ablaufwanne (11) einen ersten Eintiefungsabschnitt (121), der die zuluftseitige Ablaufwanne (19) bildet, einen zweiten Eintiefungsabschnitt (122), der die ablaufseitige Ablaufwanne (20) bildet, und einen den ersten Eintiefungsabschnitt (121) und den zweiten Eintiefungsabschnitt (122) voneinander trennenden rippenartigen Abschnitt (123) aufweist, **dadurch gekennzeichnet, dass** die Ablaufwanne (11) eine Rinne (125) aufweist, die einer Rippe (3h) zugewandt ist, die einen Motoraufnahmeabschnitt (3g) des Zuluftgebläses (3) umgibt.

2. Lüftungsvorrichtung (100) des Wärmeaustauschtyps nach Anspruch 1, wobei:
die Ablaufwanne (11) eine äußere Ablaufwanne (112), die aus einem wärmeisolierenden Material gebildet ist, und eine innere Ablaufwanne (111), welche die äußere Ablaufwanne (112) umgibt und den Zuluftweg und den Abluftweg voneinander trennt, aufweist, und
die äußere Ablaufwanne (112) eine Vielzahl von einer Gewichtsreduzierung dienenden Löchern (129, 130) in einer ihrer Oberflächen aufweist, die einer Oberfläche, die der inneren Ablaufwanne (111) zugewandt ist, entgegengesetzt ist.

3. Lüftungsvorrichtung (100) des Wärmeaustauschtyps nach Anspruch 2, wobei die äußere Ablaufwanne (112) die der Gewichtsreduzierung dienenden Löcher (129) in einem Abschnitt aufweist, der verschieden ist von einem Abschnitt, der dem Zuluftweg und dem Abluftweg, mit der inneren Ablaufwanne (111) dazwischen, zugewandt ist.

4. Lüftungsvorrichtung (100) des Wärmeaustauschtyps nach Anspruch 1, wobei eine untere Oberfläche der Zuluft-Ablaufwanne (11) parallel zur unteren Oberfläche des Hauptkörpers (1) ist.

5. Lüftungsvorrichtung (100) des Wärmeaustauschtyps nach einem der Ansprüche 1 bis 4, ferner ein Zuluftfilter (5) umfassend, das an dem Zuluftweg stromaufwärts von dem Wärmetauscher (2) angeordnet ist, wobei
der Hauptkörper (1) einen Zugang (7a), um die Außenluft hereinzulassen, und einen Zugang (8a), um die Innenluft hereinzulassen, in derselben Seitenfläche (15) aufweist und einen Zugang (16a, 16b), um einen Ausbau des Zuluftfilters (5) zu ermöglichen, in einer anderen Seitenfläche (16) aufweist, und
die Ablaufwanne (11) einen Führungsabschnitt (126) zum Führen des Zuluftfilters (5) aufweist.

## Revendications

1. Appareil de ventilation de type à échange de chaleur (100) comprenant :
un corps principal (1) dans lequel sont formées une trajectoire d'air d'alimentation pour amener l'air extérieur dans un intérieur d'une pièce et une trajectoire d'air de décharge pour décharger l'air intérieur à l'extérieur de la pièce ;
un échangeur de chaleur (2) placé dans le corps principal (1) pour permettre l'échange de chaleur entre un écoulement d'air d'alimentation passant par la trajectoire d'air d'alimentation et un écoulement d'air de décharge passant par la trajectoire d'air de décharge ;
un ventilateur d'alimentation en air (3) pour générer l'écoulement d'air d'alimentation, le ventilateur d'alimentation en air (3) étant fixé à l'intérieur du corps principal (1) ;
un ventilateur de décharge d'air (4) pour générer l'écoulement d'air de décharge, le ventilateur de décharge d'air (4) étant fixé à l'intérieur du corps principal (1) ; et
un bac de récupération (11) comprenant une partie de bac de récupération du côté de l'air d'alimentation (19) et une partie de bac de récupération du côté de l'air de décharge (20) qui sont formées de manière solidaire l'une par rapport à l'autre et recouvrant toute une surface inférieure du corps principal (1), la partie de bac de récupération du côté de l'air d'alimentation (19) retenant l'eau de drain générée dans la trajectoire d'air d'alimentation à l'intérieur de l'échangeur de chaleur (2), la partie de bac de récupération du côté de l'air de décharge (20) retenant l'eau de drain générée dans la trajectoire d'air de décharge à l'intérieur de l'échangeur de chaleur (2), dans lequel :
le bac de récupération (11) comprend une première partie d'évidement (121) qui forme le bac de récupération du côté de l'air d'alimentation (19), une seconde partie d'évidement (122) qui forme le bac de récupération du côté de l'air de décharge (20), et une partie en forme de nervure (123) qui sépare la première partie d'évidement (121) et la seconde partie d'évidement (122) l'une de l'autre, **caractérisé en ce que** le bac de récupération (11) a une rainure (125) qui fait face à une nervure (3h) qui entoure une partie de logement de moteur (3g) du ventilateur d'alimentation en air (3).

2. Appareil de ventilation de type à échange de chaleur (100) selon la revendication 1, dans lequel :
le bac de récupération (11) comprend un bac de récupération externe (112) formé avec un matériau thermiquement isolant et un bac de récupération interne (111) qui recouvre le bac de récupération externe (112) et sépare la trajectoire d'air d'alimentation et la trajectoire d'air de décharge l'une de l'autre, et
le bac de récupération externe (112) a une pluralité de trous d'éclairage (129, 130) dans sa surface opposée à une surface qui fait face au bac de récupération interne (111).

3. Appareil de ventilation de type à échange de chaleur (100) selon la revendication 2, dans lequel le bac de récupération externe (112) a les trous d'éclairage (129) dans une partie différente d'une partie qui fait face à la trajectoire d'air d'alimentation et la trajectoire d'air de décharge avec le bac de récupération interne (111) entre eux.

4. Appareil de ventilation de type à échange de chaleur (100) selon la revendication 1, dans lequel une surface inférieure du bac de récupération d'air d'alimentation (11) est parallèle à la surface inférieure du corps principal (1).

5. Appareil de ventilation de type à échange de chaleur (100) selon l'une quelconque des revendications 1 à 4, comprenant en outre un filtre d'air d'alimentation (5) placé sur la trajectoire d'air d'alimentation sur un côté en amont de l'échangeur de chaleur (2), dans lequel :
le corps principal (1) a un orifice (7a) pour admettre l'air extérieur et un orifice (8a) pour admettre l'air intérieur dans une surface latérale identique (15) et a un orifice (16a, 16b) pour permettre de détacher le filtre d'air d'alimentation (5) dans une autre surface latérale (16), et
le bac de récupération (11) comprend une partie de guidage (126) pour guider le filtre d'air d'alimentation (5).
